# EUROPÄISCHE PATENTSCHRIFT

(11) **EP 2 114 801 B1**
(45) Veröffentlichungstag und Bekanntmachung des Hinweises auf die Patenterteilung: **14.05.2014**
(21) Anmeldenummer: 08700991.6
(22) Anmeldetag: 07.01.2008
(51) Int. Cl.: B65G 39/06, F16C 27/06

(54) **LAGERANORDNUNG FÜR EINE TRAGROLLE**
BEARING ARRANGEMENT FOR A LOAD-BEARING ROLLER
ENSEMBLE DE PALIER POUR UN ROULEAU PORTEUR

(30) Priorität: 11.01.2007 DE 102007001753; 14.12.2007 DE 102007060968
(43) Veröffentlichungstag der Anmeldung: 11.11.2009
(73) Patentinhaber: AB SKF, 415 59 Göteborg (SE)
(72) Erfinder: HORLING, Peter, 97453 Mainberg (DE); KAMM, Sandra, 97469 Gochsheim (DE); OLSCHEWSKI, Armin, 97422 Schweinfurt (DE); PICKEL, Edgar, 97334 Sommerach (DE)
(74) Vertreter: Kohl, Thomas
(86) Internationale Anmeldenummer: PCT/EP2008/000045
(87) Internationale Veröffentlichungsnummer: WO 2008/083939

(56) Entgegenhaltungen:
- DE-A1- 2 400 701
- DE-U- 1 738 837
- GB-A- 2 046 876

## Beschreibung

Die Erfindung betrifft eine Lageranordnung für eine zumindest abschnittsweise hohlzylindrisch ausgebildete Tragrolle, mit mindestens einem die Tragrolle lagernden Lager, wobei zwischen einem Ring des Lagers und der Tragrolle direkt oder indirekt eine Dämpfungsschicht angeordnet ist und wobei in mindestens einem axialen Abschnittsbereich der Tragrolle zwischen der inneren zylindrischen Oberfläche der Tragrolle und der Dämpfungsschicht ein hülsenförmiger Körper angeordnet ist.

Für die Lagerung von Tragrollen sind im Stand der Technik diverse Möglichkeiten bekannt, die die spezielle Ausgestaltung mit einschließen, zwecks verbesserter Dämpfung eine Schicht Dämpfungsmaterial zwischen der Tragrolle und dem zumeist als Wälzlager ausgeführten Lager anzuordnen.

Die DE 1 738 837 U offenbart eine gattungsgemäße Lageranordnung. Hier kommt eine elastomere Dämpfungsschicht zum Einsatz, die im Radialschnitt blockförmig ausgebildet ist und in ihren beiden axialen Endbereichen Einschnürungen aufweist. Mit dieser Dämpfungsschicht kann ein hohes Dämpfungsvermögen der Lageranordnung erzielt werden. Nachteilig ist indes, dass die Präzision der Führung der Tragrolle begrenzt ist. Eine ähnliche Lösung ist aus der GB 592 043 A bekannt.

Die DE 28 01 879 A1 zeigt eine weitere ähnliche Lageranordnung, wobei das Lager über eine elastomere Zwischenschicht eine Hülse trägt. Die Hülse verbreitert sich in einem axialen Endbereich radial und ist mit ihrem radial äußeren Bereich an der zylindrischen Innenfläche der Tragrolle angeschweißt.

Ähnliche Lageranordnungen zur gedämpften Lagerung einer Tragrolle sind aus der AT 215 887, aus der DE 24 00 701 A1 aus der US 3 362 760 bekannt. Eine andere Lösung zeigt die GB 2 046 876 A.

Allen Lösungen ist es gemein, dass ein relativ hoher fertigungstechnischer Aufwand getrieben werden muss, um die Lageranordnung herzustellen. Teilweise müssen möglichst genau die Fertigungstoleranzen eingehalten werden, um eine Lageranordnung mit hoher Rundlaufgenauigkeit zu erhalten. Ferner ist auch mitunter die Steifigkeit des Aufbaus nicht ausreichend, insbesondere wenn - wie bei der DE 28 01 879 A1- radial verbreiterte Hülsenabschnitte am Inneren der Tragrolle festgeschweißt werden müssen.

Der Erfindung liegt daher die **Aufgabe** zu Grunde, eine Lageranordnung der eingangs genannten Art so fortzubilden, dass es möglich wird, sie in fertigungstechnisch einfacher und damit kostengünstiger Weise herzustellen, wobei eine stabile Lagerung der Tragrolle angestrebt wird. Die für die Herstellung erforderlichen Toleranzen sollen möglichst groß sein dürfen, ohne Gefahr der Produktion von Ausschuss zu laufen.

Die **Lösung** dieser Aufgabe durch die Erfindung ist dadurch gekennzeichnet, dass die Dämpfungsschicht als dünnwandiges, hohlzylindrisches

Element ausgebildet ist, wobei zwischen der Dämpfungsschicht und dem einem Ring des Lagers ein Trägerkörper angeordnet ist, wobei Mittel zur Verhinderung einer axialen Relativverschiebung zwischen hülsenförmigem Körper und Dämpfungsschicht vorhanden sind.

Vorzugsweise beträgt dabei die radiale Dicke der Dämpfungsschicht maximal 10 % des Außendurchmessers der Tragrolle, besonders bevorzugt maximal 5 % des Außendurchmessers der Tragrolle. Andererseits sollte die radiale Dicke der Dämpfungsschicht mindestens 1 % des Außendurchmessers der Tragrolle betragen.

Ein besonders bevorzugtes Ausführungsbeispiel der Erfindung sieht vor, dass die radiale Dicke der Dämpfungsschicht zwischen 1,5 % und 4 % des Außendurchmessers der Tragrolle beträgt.

Eine Weiterbildung der Erfindung sieht vor, dass der hülsenförmige Körper die Tragrolle einseitig axial überragt und im axialen Endbereich der Tragrolle einen sich radial nach außen erstreckenden Bund aufweist.

Der sich radial nach außen erstreckende Bund und die Tragrolle können im axialen Endbereich der Tragrolle miteinander verbunden sein. Eine bevorzugte Ausgestaltung sieht dabei vor, dass diese Verbindung durch eine Klebeverbindung hergestellt wird. Die hat Vorteile bezüglich der Dichtigkeit des Verbunds der beiden Bauteile, was insbesondere aufgrund einer Kapillarwirkung zwischen den beiden Bauteilen Bedeutung hat. Ferner wirkt sich eine Klebeverbindung positiv mit Blick auf den Korrosionssclmtz aus. Eine andere Lösung sieht vor, dass der sich radial nach außen erstreckende Bund und die Tragrolle miteinander verschweißt sind. Dabei ist bevorzugt eine Schweißnaht vorgesehen, die um den Umfang der Tragrolle vollständig umlaufend ausgebildet ist. Möglich ist auch eine Verbindung durch Reibschluss. Die Art der Verbindung wird in der Regel durch die Höhe und Richtung der Axialkraft ausgewählt.

Der hülsenförmige Körper ist besonders bevorzugt mit Presspassung in dem hohlzylindrischen Abschnitt der Tragrolle angeordnet.

Der Trägerkörper kann an einer zylindrischen, nach außen gerichteten Fläche eine Ausnehmung, insbesondere eine Eindrehung, aufweisen. Der Trägerkörper kann weiterhin einen Bord aufweisen, der den Lagerring axial übergreift.

Der hülsenförmige Körper erstreckt sich bevorzugt axial über eine größere Strecke als die Dämpfungsschicht.

Zwischen der Tragrolle und dem hülsenförmigen Körper kann weiterhin mindestens ein Dichtungselement angeordnet sein, um die Anordnung vor dem Eindringen von Schmutz und Feuchtigkeit zu schützen. Das Dichtungselement ist in diesem Falle vorzugsweise ein O-Ring.

Die Mittel zur Verhinderung einer axialen Relativverschiebung zwischen dem hülsenförmigen Körper und der Dämpfungsschicht können durch mindestens einen radial vorspringenden Abschnitt am hülsenförmigen Körper gebildet werden, der die Dämpfungsschicht axial übergreift. Eine andere Ausgestaltung sieht vor, dass die Mittel durch einen am hülsenförmigen Körper radial nach innen vorspringenden Abschnitt gebildet werden. Dieser radial nach innen vorspringende Abschnitt kann im Radialschnitt die Form einer Spitze aufweisen; er kann durch eine Eindrückung oder Einrollung erzeugt sein, die in eine radial nach außen weisende Fläche des hülsenförmigen Körpers eingebracht ist.

Die Dämpfungsschicht besteht bevorzugt aus einem Elastomer oder aus Gummimaterial. Besonders bewährt hat sich Gummimaterial, insbesondere NBR mit einer Shore-Härte von mindestens 40.

Der hülsenförmige Körper und ggf. der Trägerkörper bestehen zumeist aus Metall, insbesondere aus Stahl.

Das mindestens eine Lager ist vorzugsweise ein Wälzlager.

Die Tragrolle ist bevorzugt als Rohr konstanter Wanddicke ausgebildet, das in beiden axialen Endbereichen mit je einem Lager gelagert ist.

Eine weitere bevorzugte Ausgestaltung der Erfindung sieht vor, dass die dem hülsenförmigen Körper zugewandte innere Fläche der Tragrolle und/oder die der Tragrolle zugewandte äußere Fläche des hülsenförmigen Körpers mit einer Beschichtung mit reibungserhöhender Eigenschaft versehen ist.

Dabei weist die Beschichtung mit reibungserhöhender Eigenschaft bevorzugt Diamanten, Silizium-Karbid (SiC), Korund oder Bornitrid (CBN) auf. Die Diamanten, das Silizium-Karbid, das Korund oder das Bornitrid liegt bzw. liegen bevorzugt als Korn mit einem Durchmesserbereich zwischen 1 µm und 100 µm vor, besonders bevorzugt mit einem Durchmesserbereich zwischen 10 µm und 80 µm.

Eine Fortbildung sieht vor, dass das kornförmige Material (z. B. die Diamanten, das Silizium-Karbid, das Korund oder das Bornitrid) mit einem Bindemittel auf der Tragrolle und/oder auf dem hülsenförmigen Körper gebunden ist. Dabei kommt als Bindemittel bevorzugt eine metallische Schicht ist Frage, insbesondere eine Schicht aus Nickel. Dieses kann durch einen galvanischen Prozess aufgebracht sein.

Die Beschichtung mit reibungserhöhender Eigenschaft kann alternativ auch eine Molybdänschicht sein. Diese ist bevorzugt durch Flammspritzen aufgebracht.

Zwischen der Tragrolle und dem hülsenförmigen Körper liegt im montierten Zustand vorzugsweise eine Presspassung vor.

Es ist auch möglich, zwecks Korrosionsschutz ein vollständiges Versehen eines Bauteils bzw. der Bauteile mit der Beschichtung und/oder mit dem Bindemittel ins Auge zu fassen.

Mit der vorgeschlagenen Lösung ergibt sich in vorteilhafter Weise, dass eine hinreichende Dämpfung durch die Dämpfungsschicht erreicht werden kann, ohne die mechanische Stabilität der Lagerung der Tragrolle wesentlich zu beeinträchtigen. Durch die gewählte Form und Größe der Dämpfungsschicht wird insgesamt eine verbesserte Lageranordnung einer Tragrolle erzielt.

Mit der vorgeschlagenen Lageranordnung ergibt sich weiterhin der Vorteil, dass infolge der bevorzugten Einbringungen des hülsenförmigen Körpers in die Tragrolle die Toleranzen des Tragrollenrohrinnendurchmessers relativ grob sein dürfen, ohne Probleme zu bereiten. Folglich ist diesbezüglich keine gesonderte maschinelle Bearbeitung erforderlich. Der Bearbeitungsaufwand kann demzufolge reduziert werden.

Durch den die Tragrolle axial überragenden Bund ist ein sicheres axiales Fixieren der Tragrolle möglich.

Die vorgesehene Dämpfungsschicht - vorzugsweise aus Elastomer- oder Gummimaterial - sorgt für einen hohen Grad an Koaxialität der Bauteile und für eine Schwingungsentkopplung. Ferner werden hierdurch stoßartige Lasten besser abgefangen. Es kommt dadurch also zu einem Selbstzentrierungseffekt.

Der hülsenförmige Körper samt Dämpfungsschicht, gegebenenfalls Trägerkörper und Lager können als Einheit ausgeführt sein, die als solche an der Förderanlage eingebaut wird, zu der die Tragrolle gehört. Dies hat logistische Vorteile zur Folge. Die Montage kann durch einfaches Einpressen des hülsenförmigen Körpers in die Tragrolle erfolgen.

Ein weiterer wesentlicher Vorteil der vorgeschlagenen Lösung beim Einsatz der reibungserhöhenden Beschichtung ist, dass die axiale Befestigung verbessert werden kann, womit Mikrobewegungen verhindert werden können. Dies wiederum reduziert die Bildung von Passungsrost. Im Übrigen können dadurch höchste Drehmomente übertragen werden, ohne dass es zu einem Lösen der Verbindung der Bauteile kommt. Weiterhin ist ein Durchrutschen von Bauteilen weitgehend ausgeschlossen. Dies macht sich besonders vorteilhaft bemerkbar, wenn Umlaufbiegung im Betrieb der Tragrolle auftritt, die aufgrund der gewählten Ausgestaltung der Lageranordnung keine negative Wirkung entfalten kann.

Umgekehrt ist hiermit eine kleinere und leichtere Konzeption der Lageranordnung möglich.

Dieses Ergebnis ist bereits bei einem relativ kurzen Passungssitz zwischen Tragrolle und hülsenförmigem Körper erreichbar.

Die vorgeschlagene Lageranordnung wird bevorzugt im Tagebau eingesetzt und ist hier ein wesentlicher Bestandteil einer Tragrollenvorrichtung. Hier besteht ein hoher Bedarf an qualitativ hochwertigen und leichten Lageranordnungen, die sich durch eine hohe Lebensdauer und einen komfortablen Betrieb auszeichnen.

Gerade - aber nicht nur - bei dieser Anwendung kann eine Gewichtsreduzierung der Lageranordnung erreicht werden; es wird also eine relativ leicht bauende Anordnung realisiert. Weiterhin kann ein optimiertes Schwingungsverhalten durch den Mikroformschluss bei homogener Gefügeausprägung erreicht werden, der sich aufgrund der vorgeschlagenen Beschichtung ergibt.

Der sich aufgrund der Beschichtung mit Körnern oder mit Molybdän ergebende Mikroformschluss bietet dabei eine völlig neue Möglichkeit der Montage von Tragrollen. Ein Verschweißen von Bauteilen in der Bohrung des Tragrollenmantels ist nicht erforderlich, dennoch ist eine hohe Verdrehsicherheit gegeben. Durch den Verzicht auf ein Schweißen kann auch der Schweißverzug vermieden werden, der ansonsten die Gefahr einer Unwicht hervorrufen kann. Ebenfalls können keine schweißbedingten Koaxialitätsfehler entstehen. In der Folge ist kein Auswuchten der montierten Tragrolle erforderlich, d. h. kein Anbringen von Wuchtelementen. Trotz Verzicht auf ein Verschweißen können vergleichsweise hohe Drehmomente übertragen werden.

Die Kombination der vorgeschlagenen Beschichtung bei gleichzeitiger Presspassung zwischen Tragrolle und hülsenförmigem Körper erlaubt also die Übertragung eines hohen Torsionsmomentes, wobei sich keine Veränderung der Koaxialität der Bauteile unter hoher Belastung ergibt. Das Füge- bzw. Montageverfahren ist dabei kostengünstig umsetzbar.

In der Zeichnung sind Ausführungsbeispiele dargestellt. Es zeigen:
- Fig. 1: den Radialschnitt durch eine Lageranordnung mit einer Tragrolle, die von einem Lager gelagert wird,
- Fig. 2: die Darstellung eines Ausschnitts von Fig. 1 in einer alternativen Ausgestaltung der Erfindung,
- Fig. 3: die Darstellung eines Ausschnitts von Fig. 1 in einer weiteren alternativen Ausgestaltung
- Fig. 4: die Darstellung eines Ausschnitts von Fig. 1 in einer weiteren alternativen Ausgestaltung,
- Fig. 5: die Darstellung eines Ausschnitts von Fig. 1 in einer weiteren alternativen Ausgestaltung der Erfindung,
- Fig. 6: die Darstellung eines Ausschnitts von Fig. 1 in einer weiteren alternativen Ausgestaltung der Erfindung,
- Fig. 7: die Darstellung eines Ausschnitts von Fig. 1 in einer weiteren alternativen Ausgestaltung der Erfindung.
- Fig. 8: die Darstellung einer Lageranordnung mit einer Tragrolle in der Ansicht gemäß Fig. 1 in einer weiteren alternativen Ausgestaltung und
- Fig. 9: die Einzelheit "Z" gemäß Fig. 1.

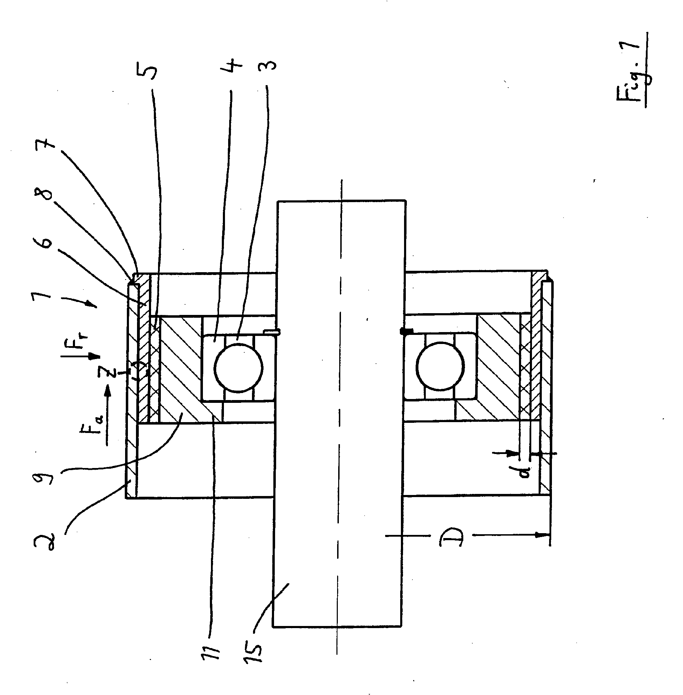

In Fig. 1 ist eine Lageranordnung 1 zu sehen, die dazu dient, eine Tragrolle 2 einer Fördereinrichtung zu lagern. Dargestellt ist eine Welle 15, auf der ein Rillenkugellager 3 festgelegt ist. Der Außenring 4 des Rillenkugellagers 3 trägt einen Trägerkörper 9, der einen einseitigen Bord 11 aufweist, der den Außenring 4 axial umgreift und für ihn eine axiale Anlage bildet.

Die Tragrolle 2 ist als hohlzylindrisches Bauteil, also als Rohr, ausgebildet, wobei in beiden axialen Endbereichen eine Lageranordnung 1 angeordnet ist, wie sie in Fig. 1 zu sehen ist. In die nach innen gerichtete Oberfläche der Tragrolle 2 ist ein hülsenförmiger Körper 6 eingepresst, der mit Presspassung in der Tragrolle 2 sitzt. Zwischen dem hülsenförmigen Körper 6 und dem Trägerkörper 9 ist eine Dämpfungsschicht 5 aus Elastomer- oder Gummimaterial angeordnet, die vorliegend als hohlzylindrische Schicht ausgeführt ist. Das Elastomer- bzw. Gummimaterial kann mit dem hülsenförmigen Körper 6 und/oder mit dem Trägerkörper 9 durch einen Spritzgießprozess oder durch einen Vulkanisationsprozess direkt verbunden sein.

Dabei ist vorgesehen, dass die radiale Dicke d der Dämpfungsschicht 5 (s. Fig. 1) in einem definierten Größenbereich liegt, der vorliegend in Relation zu dem Außendurchmesser D der Tragrolle 2 bestimmt ist. Die Dicke d liegt nämlich vorzugsweise in einem Bereich zwischen 1,5 % und 4 % des Außendurchmessers D.

Dieser Wert stellt sicher, dass einerseits eine hinreichende Dämpfung der Tragrolle gegeben ist, dass andererseits jedoch eine hinreichend präzise und steife Führung der Tragrolle sichergestellt wird.

Vorteilhaft ist, dass in mindestens einem axialen Abschnittsbereich der Tragrolle 2 zwischen der inneren zylindrischen Oberfläche der Tragrolle 2 und der Dämpfungsschicht 5 der hülsenförmige Körper 6 angeordnet ist, der die Tragrolle 2 einseitig axial überragt und im axialen Endbereich der Tragrolle 2 einen sich radial nach außen erstreckenden Bund 7 aufweist. Dieser Bund 7 kann auch als Auskragung angesprochen werden und bildet einen definierten axialen Anschlag für die Tragrolle 2. Eine axiale Fixierung der Tragrolle 2 relativ zum hülsenförmigen Körper 6 ist damit in vereinfachter Weise möglich.

Die Tragrolle 2 und der hülsenförmige Körper 6 sind dabei fest miteinander verbunden. Wie in Fig. 1 angedeutet ist, verläuft eine Schweißnaht 8 zwischen dem axialen Ende der Tragrolle 2 und dem Bund 7. Diese Schweißnaht 8 läuft über den gesamten Umfang der Tragrolle 2 bzw. des Bundes 7 um.

Infolge des Anspritzens bzw. des Vulkanisierens der Dämpfungsschicht 5 können neben den radialen Kräften Fᵣ auch axiale Kräfte Fₐ über die Dämpfungsschicht 5 und damit zwischen Lager 3 und Tragrolle 2 übertragen werden.

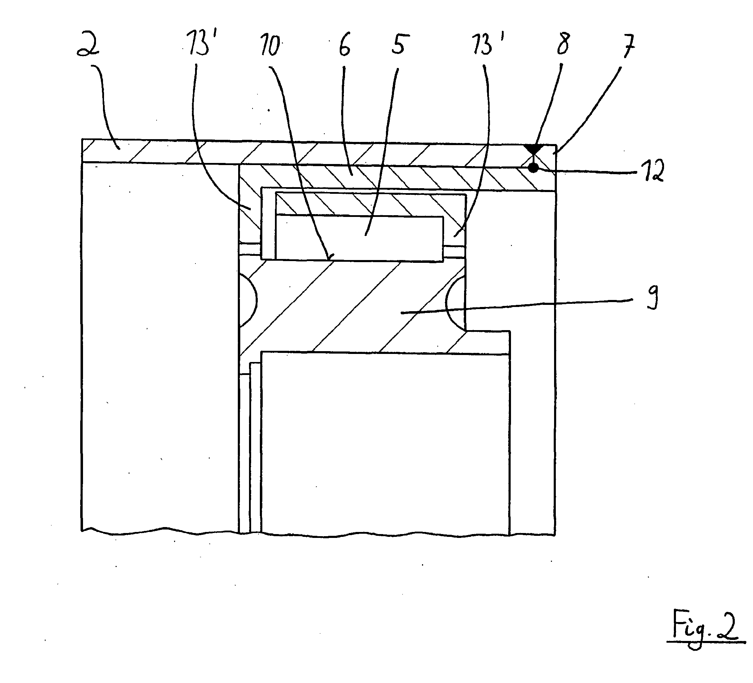

In Fig. 2 ist im Rahmen einer alternativen Ausgestaltung der Lageranordnung zu sehen, dass Mittel 13 vorgesehen sind, mit denen eine axiale Relativverschiebung zwischen dem hülsenförmigen Körper 6 und der Dämpfungsschicht 5 verhindert werden kann. Hiernach weist der hülsenförmige Körper 6 sich radial nach innen erstreckende vorspringende Abschnitte 13' auf, die eine axiale Anlage für das Material der Dämpfungsschicht 5 bilden. Der Trägerkörper 9 weist im übrigen eine Ausnehmung 10 auf, in die sich das Material der Dämpfungsschicht hinein erstreckt, so dass auch einer axialen Relativverschiebung zwischen der Dämpfungsschicht und dem Trägerkörper 9 ein Widerstand entgegengesetzt wird.

In dem Ausführungsbeispiel gemäß Fig. 2 ist auch zu sehen, dass ein Dichtungselement 12 in Form eines O-Rings zwischen der Tragrolle 2 und dem hülsenförmigen Körper 6 eingebracht werden kann, um Dichtigkeit herzustellen. Bei der hier dargestellten Lageranordnung ist im übrigen vorgesehen, dass die radial äußere Oberfläche der Tragrolle 2 und des Bundes 7 bündig abschließen.

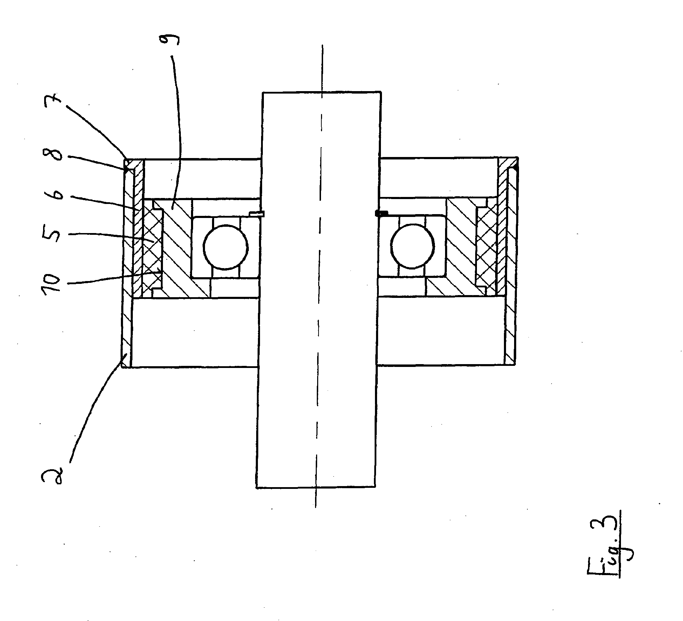

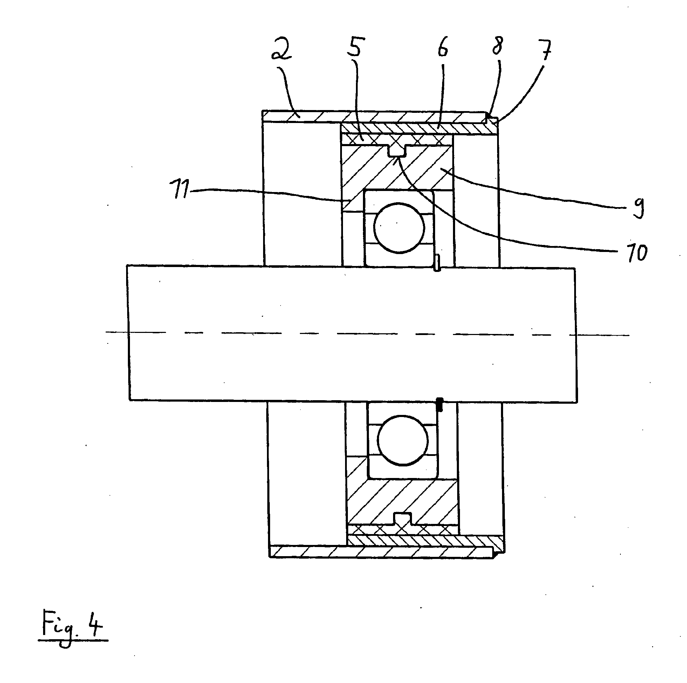

Bei den in Fig. 3 und in Fig. 4 dargestellten alternativen Lösungen weist der Trägerkörper 9 auch wieder eine Ausnehmung 10 auf, die als Eindrehung ausgebildet ist. Damit kann Material der Dämpfungsschicht 5 in diese Ausnehmung 10 eindringen, so dass sich eine verbesserte Möglichkeit der Übertragung von axialen Kräften zwischen der Dämpfungsschicht 5 und dem hülsenförmigen Körper 6 besteht. Bei der Lösung gemäß Fig. 3 ergibt sich, dass sich an den beiden axialen Enden der Dämpfungsschicht 5 eine radiale Verengung ergibt. Dies hat bei der Herstellung den Vorteil, dass durch den hier engeren Radialspalt ein Abfließen des Materials der Dämpfungsschicht 5 verhindert bzw. erschwert wird. Dennoch ist ein spritzgießtechnisch einfaches Herstellen möglich.

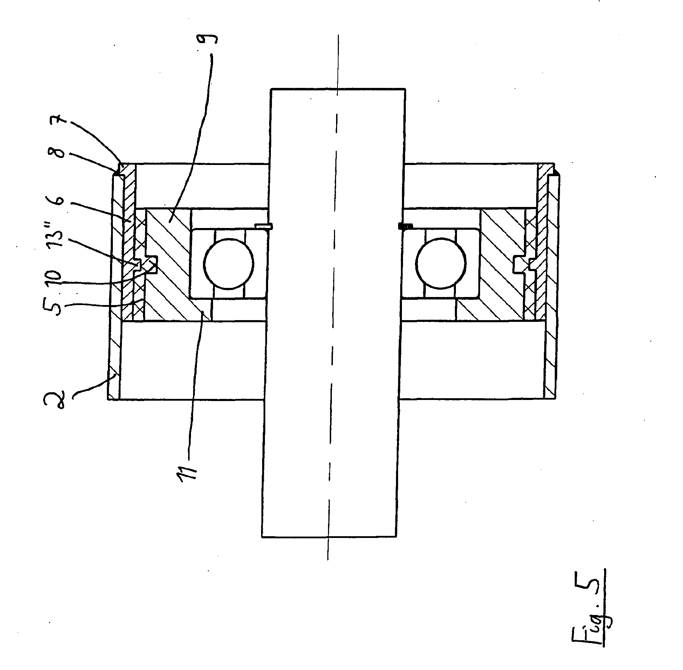

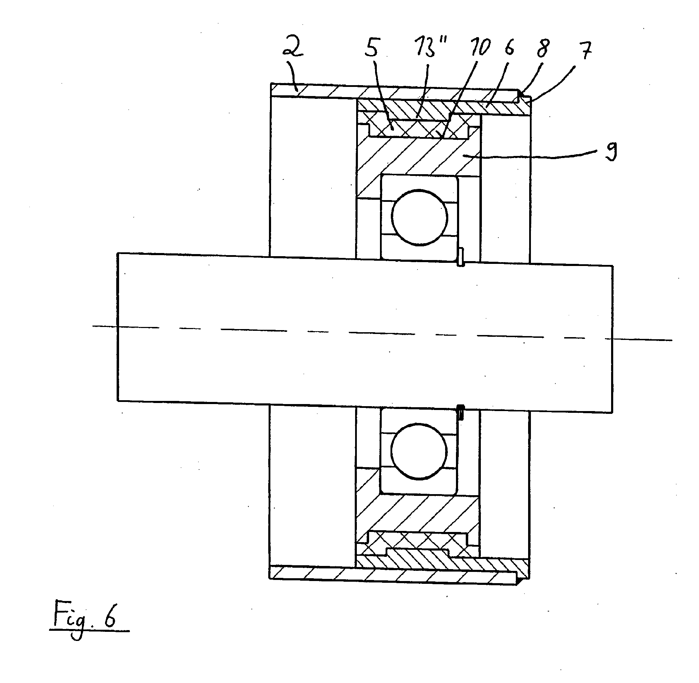

Ein weiter verbesserter Effekt der Verhinderung einer Axialverschiebung der Bauteile 5, 6, 9 wird gemäß Fig. 5 dadurch erreicht, dass sowohl ein radial nach innen vorspringender Abschnitt 13" als auch eine Ausnehmung 10 vorgesehen wird. Das Material der Dämpfungsschicht 5 wird damit quasi stufenförmig zwei Mal umgelenkt, so dass ein erhöhter Widerstand gegen eine axiale Verschiebung vorliegt. Eine ähnliche Lösung ist in Fig. 6 zu sehen, wo die Ausnehmung 10 einerseits und der radial nach innen vorspringende Abschnitt 13" fast die gesamte axiale Breite des Trägerkörpers 9 umfasst.

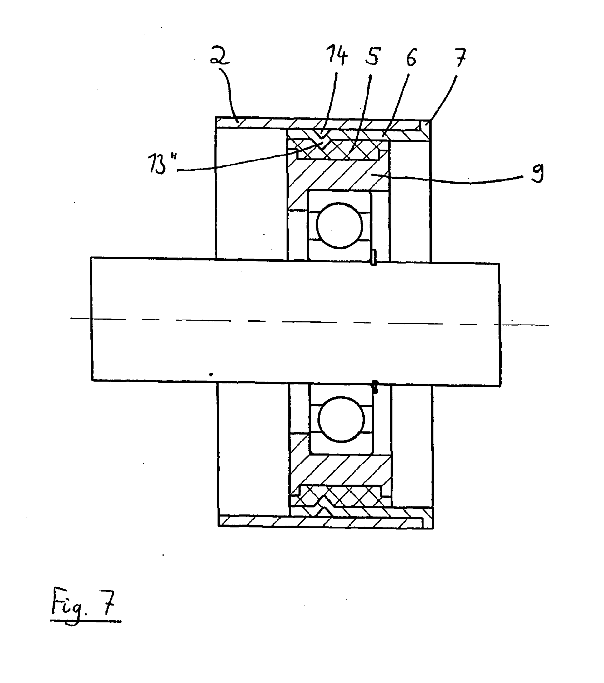

Eine fertigungstechnisch einfache Realisierung des radial nach innen vorspringenden Abschnitts 13" ist in Fig. 7 illustriert. Hier wird der hülsenförmige Körper 6 vor seiner Montage in die Tragrolle mit einer Eindrückung oder Einrollung 14 - vorzugsweise über den gesamten Umfang umlaufend - versehen, so dass sich ein spitzen- oder nasenartiger Vorsprung ergibt, der als radial nach innen vorspringender Abschnitt 13" fungiert.

Die radiale Dicke der Dämpfungsschicht 5 wird zumeist im Bereich zwischen 1 und 10 Millimetern liegen, bevorzugt im Bereich zwischen 2 und 5 Millimetern.

Sofern beim Einpressen des hülsenförmigen Körpers 6 in die Tragrolle 2 oder auch schon vorher bei der Herstellung von Hülse 6 bzw. Tragrolle 2 insbesondere durch Tiefziehvorgänge Längsriefen entstehen sollten, ist dies nicht nachteilig, da diese als Sicherung der beiden Bauteile 2, 6 gegen Verdrehen wirken.

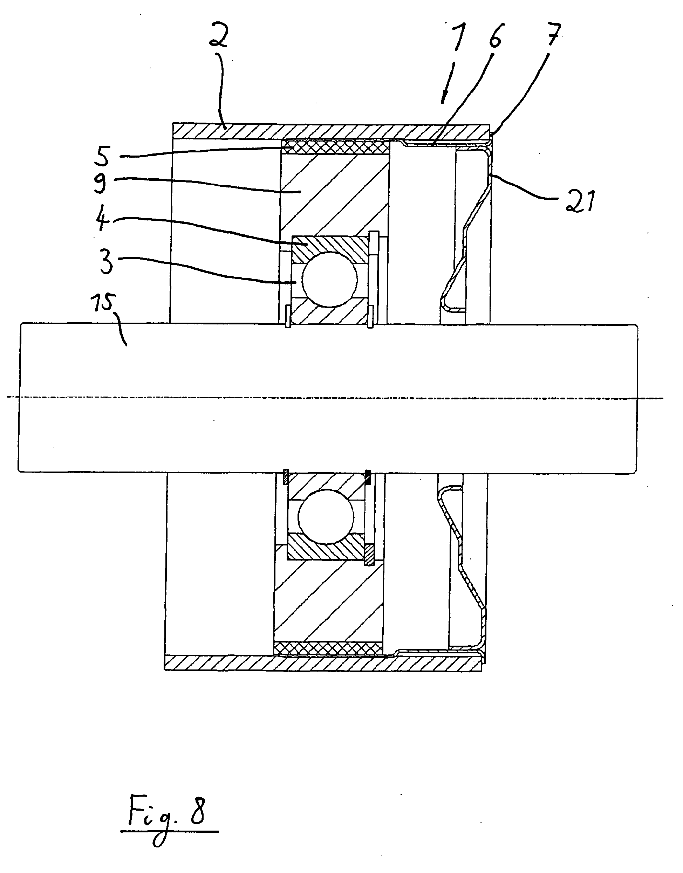

Fig. 8 zeigt eine weitere alternative Ausgestaltung der vorgeschlagenen Lageranordnung 1. Hier ist der hülsenförmige Körper 6 über die axiale Erstreckung des Trägerkörpers 9 mit einem ersten Durchmesser versehen, der sich dann in Richtung axiales (rechtes) Ende der Tragrolle 2 auf einen zweiten, geringeren Durchmesser reduziert. Am axialen (rechten) Ende des hülsenförmigen Körpers 6 ragt der Bund 7 radial nach außen und umgreift die Tragrolle 2. Der innenzylindrische Verlauf dieses Abschnitts des hülsenförmigen Körpers 6 dient als Sitz für einen sich in Achsrichtung erstreckenden Abschnitt eines Deckels 21, der von der rechten Seite her auf die Lageranordnung 1 aufgeschoben ist und das Eindringen von Verunreinigungen verhindert.

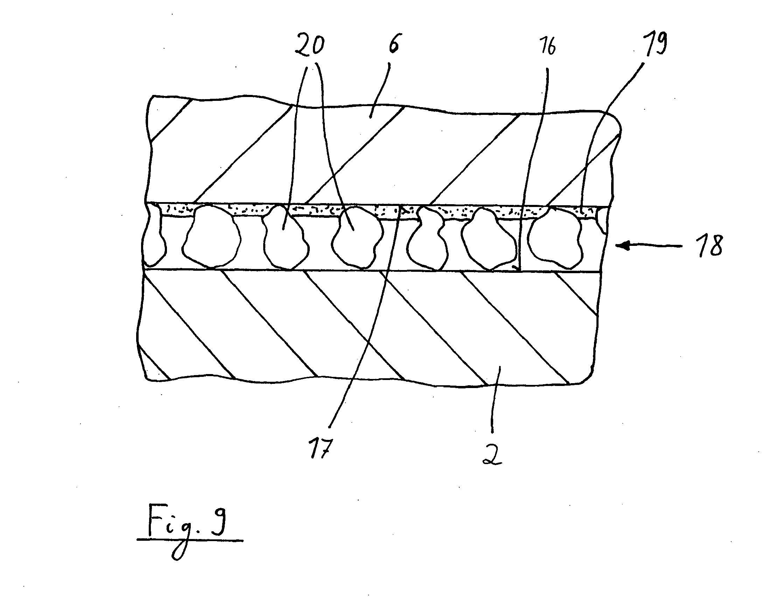

In Fig. 9 ist die Einzelheit "Z" gemäß Fig. 1 dargestellt, wobei anzumerken ist, dass es sich hier um eine schematische Darstellung handelt. Dargestellt ist eine Beschichtung 18, die reibungserhöhend wirkt und die zwischen der inneren Fläche 16 der Tragrolle 2 und der äußeren Fläche 17 des hülsenförmigen Körpers 6 angeordnet ist.

Zu erkennen sind Körner 20, die aus Diamant, aus Siliziumkarbid (SiC), aus Korund, aus Bornitrid (CBN) oder anderen Hartstoffen bestehen. Der Korndurchmesser bewegt sich bevorzugt im Bereich zwischen 20 µm und 60 µm. Die Körner 20 sind mit einem Bindemittel 19 in Form einer galvanisch aufgebrachten Nickelschicht an einem Bauteil - im Ausführungsbeispiel an der außenzylindrischen Fläche des hülsenförmigen Körpers 6 - fixiert.

Dabei ist die in Rede stehende Beschichtung besonders in dem Stirnbereich des hülsenförmigen Körpers 6 von Vorteil, da durch die Beschichtung auch ein Korrosionsschutz erreicht werden kann. Dort nämlich kann es leicht aufgrund der Kapillarwirkung zwischen den Bauteilen zum Eindringen von Feuchtigkeit kommen. Dem kann besonders günstig entgegen gewirkt werden, wenn als Beschichtung ein Manganphosphatieren vorgesehen wird. Bewährt hat sich insbesondere ein chemisches Vernickeln. Dies ist beispielsweise unter der Bezeichnung "Durni Coat" am Markt erhältlich. Der Entstehung von Passungsrost wird so effektiv entgegengewirkt.

### Bezugszeichenliste

- 1: Lageranordnung
- 2: Tragrolle
- 3: Lager (Wälzlager)
- 4: Lagerring
- 5: Dämpfungsschicht
- 6: hülsenförmiger Körper
- 7: Bund
- 8: Schweißnaht
- 9: Trägerkörper
- 10: Ausnehmung (Eindrehung)
- 11: Bord
- 12: Dichtungselement
- 13: Mittel zur Verhinderung einer axialen Relativverschiebung
- 13': radial vorspringender Abschnitt
- 13": radial nach innen vorspringender Abschnitt
- 14: Eindrückung/Einrollung
- 15: Welle
- 16: innere Fläche
- 17: äußere Fläche
- 18: Beschichtung
- 19: Bindemittel (Nickel)
- 20: Korn (Diamant, SiC, CBN)
- 21: Deckel
- Fᵣ: radiale Kraft
- Fₐ: axiale Kraft
- d: radiale Dicke der Dämpfungsschicht
- D: Außendurchmessers der Tragrolle

## Patentansprüche

1. Lageranordnung (1) für eine zumindest abschnittsweise hohlzylindrisch ausgebildete Tragrolle (2), mit mindestens einem die Tragrolle (2) lagernden Lager (3), wobei zwischen einem Ring (4) des Lagers (3) und der Tragrolle (2) direkt oder indirekt eine Dämpfungsschicht (5) angeordnet ist und wobei in mindestens einem axialen Abschnittsbereich der Tragrolle (2) zwischen der inneren zylindrischen Oberfläche der Tragrolle (2) und der Dämpfungsschicht (5) ein hülsenförmiger Körper (6) angeordnet ist, **dadurch gekennzeichnet, dass** die Dämpfungsschicht (5) als dünnwandiges, hohlzylindrisches Element ausgebildet ist, wobei zwischen der Dämpfungsschicht (5) und dem einen Ring (4) des Lagers (3) ein Trägerkörper (9) angeordnet ist, wobei Mittel (13) zur Verhinderung einer axialen Relativverschiebung zwischen hülsenförmigem Körper (6) und Dämpfungsschicht (5) vorhanden sind.

2. Lageranordnung nach Anspruch 1, **dadurch gekennzeichnet, dass** die radiale Dicke (d) der Dämpfungsschicht (5) maximal 10 % des Außendurchmessers (D), vorzugsweise maximal 5 % des Außendurchmessers (D), der Tragrolle (2) beträgt.

3. Lageranordnung nach Anspruch 2, **dadurch gekennzeichnet, dass** die radiale Dicke (d) der Dämpfungsschicht (5) mindestens 1 % des Außendurchmessers (D) der Tragrolle (2) beträgt.

4. Lageranordnung nach einem der Ansprüche 1 bis 3, **dadurch gekennzeichnet, dass** der hülsenförmige Körper (6) die Tragrolle (2) einseitig axial überragt und im axialen Endbereich der Tragrolle (2) einen sich radial nach außen erstreckenden Bund (7) aufweist.

5. Lageranordnung nach einem der Ansprüche 1 bis 4, **dadurch gekennzeichnet, dass** der Trägerkörper (9) an einer zylindrischen, nach außen gerichteten Fläche eine Ausnehmung (10), insbesondere eine Eindrehung, aufweist.

6. Lageranordnung nach einem der Ansprüche 1 bis 5, **dadurch gekennzeichnet, dass** der Trägerkörper (9) einen Bord (11) aufweist, der den Ring (4) des Lagers (3) axial übergreift.

7. Lageranordnung nach einem der Ansprüche 1 bis 6, **dadurch gekennzeichnet, dass** zwischen der Tragrolle (2) und dem hülsenförmigen Körper (6) mindestens ein Dichtungselement (12), insbesondere ein O-Ring, angeordnet ist.

8. Lageranordnung nach einem der Ansprüche 1 bis 7, **dadurch gekennzeichnet, dass** die Mittel (13) zur Verhinderung einer axialen Relativverschiebung zwischen hülsenförmigem Körper (6) und Dämpfungsschicht (5) durch mindestens einen radial vorspringenden Abschnitt (13') am hülsenförmigen Körper (6) gebildet wird, der die Dämpfungsschicht (5) axial übergreift.

9. Lageranordnung nach einem der Ansprüche 1 bis 7, **dadurch gekennzeichnet, dass** die Mittel (13) zur Verhinderung einer axialen Relativverschiebung zwischen hülsenförmigem Körper (6) und Dämpfungsschicht (5) durch einen am hülsenförmigen Körper (6) radial nach innen vorspringenden Abschnitt (13") gebildet werden.

10. Lageranordnung nach Anspruch 9, **dadurch gekennzeichnet, dass** der radial nach innen vorspringende Abschnitt (13") im Radialschnitt die Form einer Spitze aufweist.

11. Lageranordnung nach Anspruch 9 oder 10, **dadurch gekennzeichnet, dass** der radial nach innen vorspringenden Abschnitt (13") durch eine Eindrückung oder Einrollung (14) erzeugt ist, die in eine radial nach außen weisende Fläche des hülsenförmigen Körpers (6) eingebracht ist.

12. Lageranordnung (1) nach einem der Ansprüche 1 bis 11, **dadurch gekennzeichnet, dass** die dem hülsenförmigen Körper (6) zugewandte innere Fläche (16) der Tragrolle (2) und/oder die der Tragrolle (2) zugewandte äußere Fläche (17) des hülsenförmigen Körpers (6) mit einer Beschichtung (18) mit reibungserhöhender Eigenschaft versehen ist.

13. Lageranordnung nach Anspruch 12, **dadurch gekennzeichnet, dass** die Beschichtung (18) mit reibungserhöhender Eigenschaft Diamanten, Silizium-Karbid (SiC), Korund oder Bornitrid (CBN) aufweist.

14. Lageranordnung nach Anspruch 13, **dadurch gekennzeichnet, dass** die Diamanten oder das Silizium-Karbid oder das Korund oder das Bornitrid mit einem Bindemittel (19), insbesondere in Form einer galvanisch aufgebrachten Nickelschicht, auf der Tragrolle (2) und/oder auf dem hülsenförmigen Körper (6) gebunden sind.

## Claims

1. Bearing arrangement (1) for a load-bearing roller (2) which is of hollow-cylindrical configuration at least in sections, having at least one bearing (3) which mounts the load-bearing roller (2), a damping layer (5) being arranged directly or indirectly between a ring (4) of the bearing (3) and the load-bearing roller (2), and a sleeve-shaped body (6) being arranged in at least one axial section region of the load-bearing roller (2) between the inner cylindrical surface of the load-bearing roller (2) and the damping layer (5), **characterized in that** the damping layer (5) is configured as a thin-walled, hollow-cylindrical element, a carrier body (9) being arranged between the damping layer (5) and the one ring (4) of the bearing (3), there being means (13) for preventing an axial relative displacement between the sleeve-shaped body (6) and the damping layer (5).

2. Bearing arrangement according to Claim 1, **characterized in that** the radial thickness (d) of the damping layer (5) is at most 10% of the outer diameter (D), preferably at most 5% of the outer diameter (D), of the load-bearing roller (2).

3. Bearing arrangement according to Claim 2, **characterized in that** the radial thickness (d) of the damping layer (5) is at least 1% of the outer diameter (D) of the load-bearing roller (2).

4. Bearing arrangement according to one of Claims 1 to 3, **characterized in that** the sleeve-shaped body (6) protrudes axially beyond the load-bearing roller (2) on one side and has a radially outwardly extending collar (7) in the axial end region of the load-bearing roller (2).

5. Bearing arrangement according to one of Claims 1 to 4, **characterized in that** the carrier body (9) has a recess (10), in particular a turned groove, on a cylindrical, outwardly directed face.

6. Bearing arrangement according to one of Claims 1 to 5, **characterized in that** the carrier body (9) has a rim (11) which engages axially over the ring (4) of the bearing (3).

7. Bearing arrangement according to one of Claims 1 to 6, **characterized in that** at least one seal element (12), in particular an 0-ring, is arranged between the load-bearing roller (2) and the sleeve-shaped body (6).

8. Bearing arrangement according to one of Claims 1 to 7, **characterized in that** the means (13) for preventing an axial relative displacement between the sleeve-shaped body (6) and the damping layer (5) is formed by at least one radially projecting section (13') on the sleeve-shaped body (6), which section (13') engages axially over the damping layer (5).

9. Bearing arrangement according to one of Claims 1 to 7, **characterized in that** the means (13) for preventing an axial relative displacement between the sleeve-shaped body (6) and the damping layer (5) are formed by a section (13") which projects radially inwardly on the sleeve-shaped body (6).

10. Bearing arrangement according to Claim 9, **characterized in that** the radially inwardly projecting section (13") has the form of a barb in the radial section.

11. Bearing arrangement according to Claim 9 or 10, **characterized in that** the radially inwardly projecting section (13") is produced by an indentation or rolledin portion (14) which is made in a radially outwardly pointing face of the sleeve-shaped body (6).

12. Bearing arrangement (1) according to one of Claims 1 to 11, **characterized in that** the inner face (16) of the load-bearing roller (2), which inner face (16) faces the sleeve-shaped body (6), and/or the outer face (17) of the sleeve-shaped body (6), which outer face (17) faces the load-bearing roller (2), are/is provided with a coating (18) with a friction-increasing property.

13. Bearing arrangement according to Claim 12, **characterized in that** the coating (18) with a friction-increasing property has diamonds, silicon carbide (SiC), corundum or cubic boron nitride (CBN).

14. Bearing arrangement according to Claim 13, **characterized in that** the diamonds or the silicon carbide or the corundum or the cubic boron nitride are/is bonded on the load-bearing roller (2) and/or on the sleeve-shaped body (6) by way of a bonding agent (19), in particular in the form of a galvanically applied nickel layer.

## Revendications

1. Ensemble de palier (1) pour un rouleau porteur (2) réalisé au moins en partie sous forme cylindrique creuse, comprenant au moins un palier (3) supportant le rouleau porteur (2), une couche d'amortissement (5) étant disposée directement ou indirectement entre une bague (4) du palier (3) et le rouleau porteur (2), et un corps en forme de douille (6) étant disposé dans au moins une région partielle axiale du rouleau porteur (2) entre la surface cylindrique interne du rouleau porteur (2) et la couche d'amortissement (5), **caractérisé en ce que** la couche d'amortissement (5) est réalisée sous forme d'élément cylindrique creux à paroi mince, un corps de support (9) étant disposé entre la couche d'amortissement (5) et l'une des bagues (4) du palier (3), des moyens (13) pour empêcher un déplacement relatif axial entre le corps en forme de douille (6) et la couche d'amortissement (5) étant prévus.

2. Ensemble de palier selon la revendication 1, **caractérisé en ce que** l'épaisseur radiale (d) de la couche d'amortissement (5) vaut au maximum 10 % du diamètre extérieur (D), de préférence au maximum 5 % du diamètre extérieur (D), du rouleau porteur (2).

3. Ensemble de palier selon la revendication 2, **caractérisé en ce que** l'épaisseur radiale (d) de la couche d'amortissement (5) vaut au moins 1 % du diamètre extérieur (D) du rouleau porteur (2).

4. Ensemble de palier selon l'une quelconque des revendications 1 à 3, **caractérisé en ce que** le corps en forme de douille (6) fait saillie axialement d'un côté au-delà du rouleau porteur (2) et présente, dans la région d'extrémité axiale du rouleau porteur (2), une collerette (7) s'étendant radialement vers l'extérieur.

5. Ensemble de palier selon l'une quelconque des revendications 1 à 4, **caractérisé en ce que** le corps de support (9) présente, sur une surface cylindrique orientée vers l'extérieur, un évidement (10), en particulier une gorge tournée dans la masse.

6. Ensemble de palier selon l'une quelconque des revendications 1 à 5, **caractérisé en ce que** le corps de support (9) comprend un bord (11) qui recouvre axialement la bague (4) du palier (3).

7. Ensemble de palier selon l'une quelconque des revendications 1 à 6, **caractérisé en ce qu'**au moins un élément d'étanchéité (12), en particulier un joint torique, est disposé entre le rouleau porteur (2) et le corps en forme de douille (6).

8. Ensemble de palier selon l'une quelconque des revendications 1 à 7, **caractérisé en ce que** les moyens (13) pour empêcher un déplacement relatif axial entre le corps en forme de douille (6) et la couche d'amortissement (5) sont formés par au moins une section (13') faisant saillie radialement sur le corps en forme de douille (6), laquelle section recouvre axialement la couche d'amortissement (5).

9. Ensemble de palier selon l'une quelconque des revendications 1 à 7, **caractérisé en ce que** les moyens (13) pour empêcher un déplacement relatif axial entre le corps en forme de douille (6) et la couche d'amortissement (5) sont formés par une section (13") faisant saillie radialement vers l'intérieur sur le corps en forme de douille (6).

10. Ensemble de palier selon la revendication 9, **caractérisé en ce que** la section (13") faisant saillie radialement vers l'intérieur présente, en coupe radiale, la forme d'une pointe.

11. Ensemble de palier selon la revendication 9 ou 10, **caractérisé en ce que** la section (13") faisant saillie radialement vers l'intérieur est produite par un estampage ou un roulage (14) qui est pratiqué dans une surface tournée radialement vers l'extérieur du corps en forme de douille (6).

12. Ensemble de palier (1) selon l'une quelconque des revendications 1 à 11, **caractérisé en ce que** la surface intérieure (16), tournée vers le corps en forme de douille (6), du rouleau porteur (2) et/ou la surface extérieure (17), tournée vers le rouleau porteur (2), du corps en forme de douille (6) est/sont pourvue(s) d'un revêtement (18) présentant une propriété augmentant le frottement.

13. Ensemble de palier selon la revendication 12, **caractérisé en ce que** le revêtement (18) présentant une propriété augmentant le frottement comprend des diamants, du carbure de silicium (SiC), du corindon ou du nitrure de bore (CBN).

14. Ensemble de palier selon la revendication 13, **caractérisé en ce que** les diamants ou le carbure de silicium ou le corindon ou le nitrure de bore sont liés sur le rouleau porteur (2) et/ou sur le corps en forme de douille (6) à l' aide d'un liant (19), en particulier sous la forme d'une couche de nickel appliquée par voie galvanique.
